Europäisches Patentamt

European Patent Office

Office européen des brevets

(19)

(11) Veröffentlichungsnummer: **0 262 558**

**A1**

(12) ## EUROPÄISCHE PATENTANMELDUNG

(21) Anmeldenummer: **87113836.8**

(51) Int. Cl.4: **B01D 53/36**

(22) Anmeldetag: **22.09.87**

(30) Priorität: **30.09.86 DE 3633283**

(43) Veröffentlichungstag der Anmeldung:
**06.04.88 Patentblatt 88/14**

(84) Benannte Vertragsstaaten:
**AT BE CH DE GB LI NL SE**

(71) Anmelder: **Siemens Aktiengesellschaft Berlin und München**
**Wittelsbacherplatz 2**
**D-8000 München 2(DE)**

(72) Erfinder: **Balling, Lothar, Dipl.-Ing. (FH)**
**Marienstrasse 6**
**D-8510 Fürth(DE)**
Erfinder: **Spitznagel, Günther, Dr.**
**Würzburger Ring 39**
**D-8520 Erlangen(DE)**

(54) **Katalysatoranordnung zur Minderung der Sickoxide in Rauchgasen.**

(57) Die Erfindung bezieht sich auf eine Katalysatoranordnung zur Minderung der Stickoxide in Rauchgasen mit Meßmitteln zur Überwachung der katalytischen Aktivität. Bei solchen Katalysatoranordnungen besteht das Problem, Vergiftungen und verbrauchte Katalysatoren rechtzeitig zu ermitteln. Hierzu sieht die Erfindung vor, vor und hinter den einzelnen Lagen (8,9, 10,31 bis 34) des Katalysatormaterials Temperaturmeßfühler (17,18,26,27,36 bis 47) einzubauen und den Temperaturmeßfühlern einen Differenzverstärker (21,29,48 bis 55) zur Bestimmung der Temperaturdifferenz zuzuordnen. Eine erfindungsgemäße Katalysatoranordnung ist insbesondere für den Einsatz in Entstickungsanlagen von Rauchgasen geeignet.

FIG 6

EP 0 262 558 A1

## Katalysatoranordnung zur Minderung der Stickoxide in Rauchgasen

Die Erfindung bezieht sich auf eine Katalysatoranordnung zur Minderung der Stickoxide in Rauchgasen in Gegenwart eines Reduktionsmittels mit mindestens einer den gesamten Querschnitt des Rauchgasstromes überdeckenden Lage von Katalysatorelementen und mit Meßmitteln zur Überwachung der katalytischen Effektivität.

Katalysatoren zur Minderung der Stickoxide in Rauchgasen sind unter anderem durch die DE-PS 24 58 888 vorbekannt. Zur Überwachung der Aktivität solcher Katalysatoren ist bei bisherigen Anlagen der Gehalt der Rauchgase an Stickoxiden und an Reduktionsmitteln, wie z.B. Ammoniak von Zeit zu Zeit vor und hinter dem zu überwachenden Katalysator gemessen worden. Diese Messungen sind aber wegen der Anwesenheit weiterer gasförmiger Komponenten, wie z.B. $SO_2$, $SO_3$, $HCl$ nur mit einem relativ hohen apparativen Aufwand realisierbar. Darüber hinaus erlauben sie nur eine integrale Aussage über die Aktivität des gesamten Katalysators. Lokale Störungen der Katalysatoraktivität oder die Erschöpfung einzelner Lagen des Katalysators lassen sich so nicht feststellen.

Der Erfindung liegt daher die Aufgabe zugrunde, eine Katalysatoranordnung in einer Weise mit Meßmitteln auszustatten, die es erlaubt deren Aktivität ohne allzu großen Aufwand zu überwachen. Darüber hinaus sollte es dadurch auch ermöglicht werden, bei einem aus mehren Lagen bestehenden Katalysator die Erschöpfung einzelner Lagen desselben festzustellen bzw. deren rechtzeitigen Austauschzeitpunkt vorherzusagen.

Diese Aufgabe wird durch die Merkmale des Anspruchs 1 gelöst. Weitere vorteilhafte Ausgestaltungen sind den Ansprüchen 2 bis 12 zu entnehmen.

Ausgehend von der Erkenntnis, daß bei der katalytischen Reduktion der Stickoxide mit $NH_3$ oder anderen Reduktionsmitteln Wärme frei wird, wird die Temperaturerhöhung der Rauchgase beim Durchströmen der einzelnen Lagen des Katalysatormaterials zum Indikator für die katalytische Aktivität gemacht. Dieser Idee kommt die Tatsache zugute, daß die Temperaturerhöhung viel einfacher meßbar ist, als die Stoffzusammensetzung der Rauchgase. Auch läßt sie sich als Differenz der Rauchgastemperatur am Eingang und am Ausgang jeder einzelnen Lage des Katalysators darstellen. Der bestimmende Meßwert läßt sich über einen Differenzverstärker gewinnen. Weil diese Temperaturerhöhung außer von der Aktivität des Katalysatormaterials, von der Konzentration der Stickoxide und der Reduktionsmittel und auch noch von den Wärmeverlusten der Meßstrecke abhängt, läßt sich die Temperaturerhöhung zur Messung der katalytischen Aktivität nur dann heranziehen, wenn die Wärmeverluste minimiert und die Konzentration der Stickoxide und Reduktionsmittel am Eingang der Meßstrecke berücksichtigt werden.

Die Restaktivität kennzeichnende Meßwerte erhält man, wenn in besonders vorteilhafter Weiterbildung der Erfindung die Ausgänge der Differenzverstärker zur Bestimmung der katalytischen Aktivität an eine weitere Schaltungslogik zum Vergleich des gewonnenen Meßsignals je Lage mit einem voreinstellbaren Wert angeschlossen sind. In diesem Fall werden die ermittelten, der katalytischen Umsetzung proportionalen Temperaturdifferenzen mit jenen Temperaturdifferenzen verglichen, die beim neuen bzw. verbrauchten Katalysator erhalten werden würden. Dieser Vergleichswert stellt dann eine Aussage über die gegenwärtige katalytische Aktivität dar.

Die Zuverlässigkeit dieser Aussage läßt sich noch steigern, wenn die Temperaturmeßfühler in zweckmäßiger Ausgestaltung der Erfindung in nicht verstopfbare bzw. erodierbare Bereiche der einzelnen Katalysatorelemente eingebaut sind. Hierdurch werden Verfälschungen, wie sie z.B. durch Asche- und Staubablagerungen oder durch einen gedrosselten Gasstrom resultieren können, ausgeschaltet.

Die Meßempfindlichkeit läßt sich erhöhen, wenn die Temperaturmeßfühler bei Verwendung von Plattenkatalysatoren mit ihren Meßstellen in einen Zwischenraum zwischen zwei Platten in einigem Abstand von den Begrenzungswänden angeordnet sind. Diese Maßnahme minimiert den Einfluß von Wärmeverlusten durch die Wandung des Katalysatorgehäuses, so daß die gemessenen Temperaturdifferenzen weniger stark abgeflacht werden.

Weitere Einzelheiten der Erfindung werden anhand eines in den Figuren dargestellten Ausführungsbeispieles erläutert. Es zeigen:

FIG 1 eine schaubildliche Gesamtansicht einer Anlage zur Minderung der Stickoxide in Rauchgasen,

FIG 2 eine vergrößerte schaubildliche Darstellung eines erfindungsgemäß mit Meßmitteln ausgestatteten Katalysatorelements,

FIG 3 eine Ausschnittsvergrößerung der Fig. 2 mit der Einbaustelle eines Temperaturmeßfühlers,

FIG 4 eine vergrößerte schaubildiche Darstellung eines anderen Katalysatorelementes,

FIG 5 eine Ausschnittsvergrößerung Fig. 4 mit der Einbaustelle eines Temperaturmeßfühlers,

FIG 6 eine schematische Anordnung der Temperaturmeßfühler in einer vierlagigen Katalysatoranordnung mit den den einzelnen Lagen zugeordneten Meßwerten für die Temperaturdifferenz und deren Veränderung bei Erschöpfung der ersten Lage der Katalysatoranordnung.

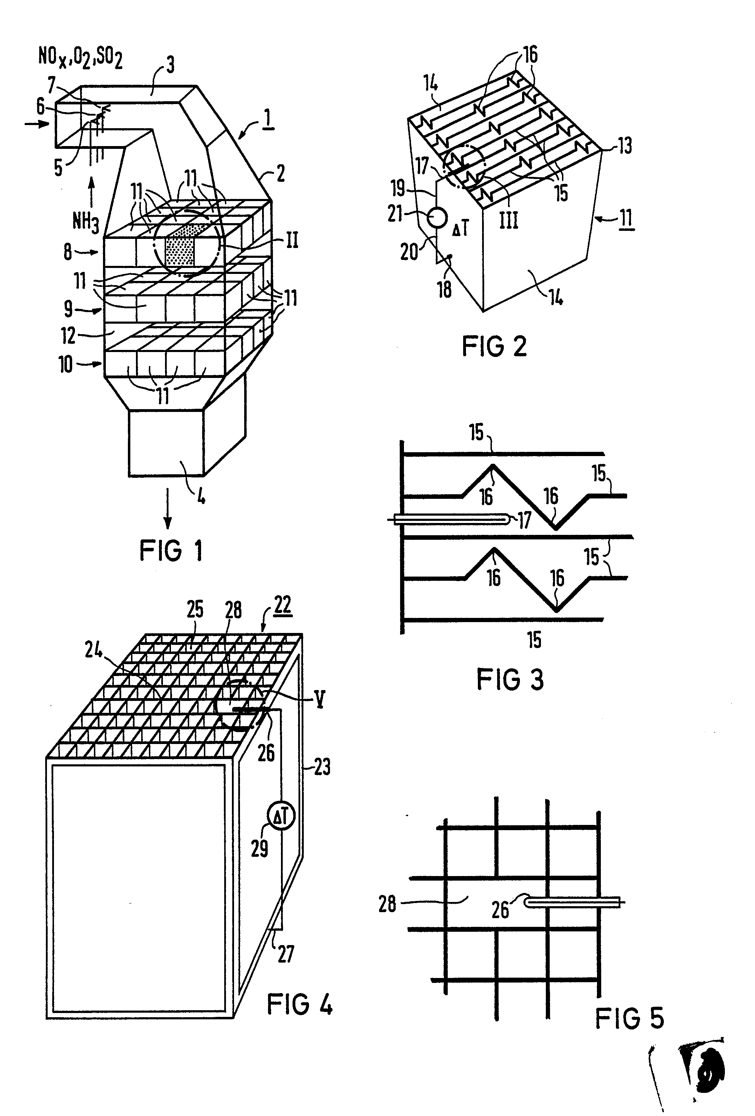

Die FIG 1 zeigt den Aufbau einer Anlage 1 zur Minderung der Stickoxide. Sie besteht im wesentlichen aus einem im Ausführungsbeispiel vertikal angeordneten rechteckigen Gehäuse 2 mit einem oberen Einströmstutzen 3 und einem unteren Ausströmstutzen 4 für die Rauchgase. Im Einströmstutzen 3 sind mehrere Düsen 5,6,7 für die Einleitung von $NH_3$ eingebaut. Im Gehäuse 2 ist in drei verschiedenen Ebenen je eine Lage 8,9,10 Katalysatorelemente 11 eingesetzt. Diese bündig aneinander und an der Wand 12 des Gehäuses 2 anschließenden Katalysatorelemente füllen in jeder der drei gezeichneten Lagen den gesamten Querschnitt des Gehäuses 2 aus.

Wie die FIG 2 zeigt, handelt es sich bei den Katalysatorelementen 11 der FIG 1 um sogenannte Plattenkatalysatorelemente. Diese bestehen im Ausführungsbeispiel aus einem rechteckigen oben und unten offenen Kasten 13, in den senkrecht von oben zueinander und zu zwei einander gegenüberliegenden Seitenwänden 14 des Kastens 13 parallel ausgerichtete Metallplatten 15 gestellt sind. Diese Metallplatten sind ebenso hoch wie die Seitenwände 14 des Kastens 13. Sie sind mit einem katalytisch aktiven Material beschichtet und zur Einhaltung eines gleichmäßigen gegenseitigen Abstandes mit Sicken 16 versehen. Im Bereich der halben Breite einer senkrecht zu den beschichteten Metallplatten 15 stehenden Seitenwand 16 des Kastens 13 ist an deren oberen und unteren Rand je ein Temperaturmeßfühler 17,18 so befestigt, daß sein temperaturempfindliches Ende möglichst weit in den Spalt zwischen zwei benachbarten Metallplatten 15 hereinreicht. Diese Befestigungsstelle ist in der Ausschnittsvergrößerung der FIG 3 im einzelnen näher dargestellt.

Wie die FIG 2 ebenfalls veranschaulicht, sind die Anschlüsse 19,20 dieser beiden Temperaturmeßfühler 17,18 an einen Differenzverstärker 21 angeschlossen, der ein der Temperaturdifferenz entsprechendes Signal bildet. Die Anschlüsse 19,20 sind im Ausführungsbeispiel nach außen aus dem kastenartigen Rahmen 13 herausgeführt dargestellt. Sie könnten aber ebenso gut im Innern des Kastens nach oben oder unten herausgeführt werden.

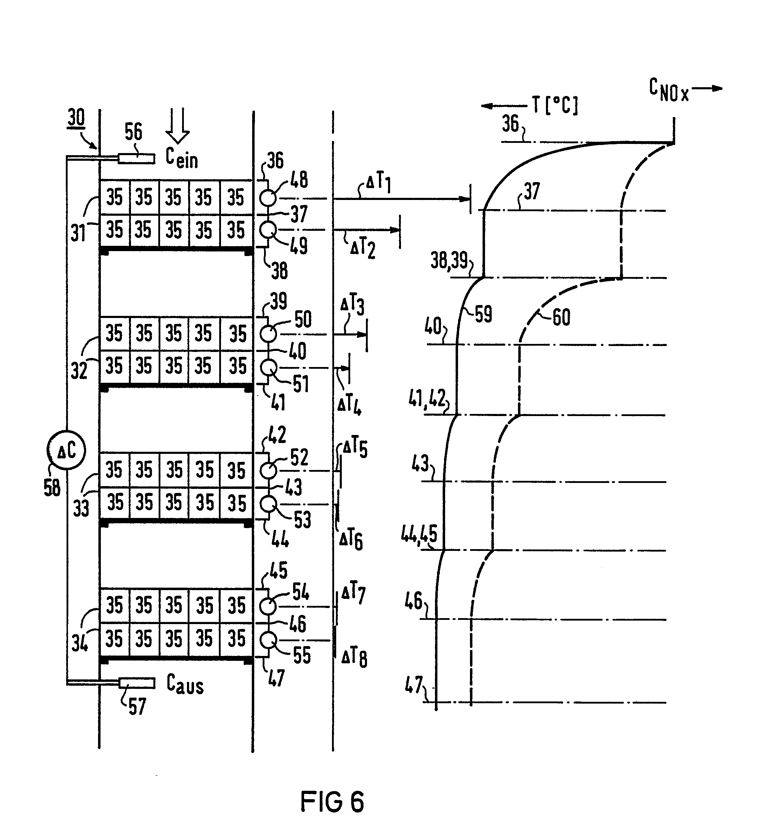

Die FIG 4 zeigt den Aufbau eines anderen, alternativ zu den in der FIG 2 gezeigten, im Gehäuse 2 der Anlage 1 einsetzbaren Katalysatorelementes 22. Dieses ist ein Wabenkatalysatorelement, bei dem das katalytisch aktive Material auf der Oberfläche einer in einem oben und unten offenen kastenartigen Rahmen 23 eingesetzten wabenartigen oben und unten offenen Struktur 24 aufgebracht ist. Die einzelnen Waben 25 haben im Ausführungsbeispiel einen rechteckigen Querschnitt. Die Temperaturmeßfühler 26, 27 sind auch hier am oberen und unteren Rand des kastenartigen Rahmens eingebaut. Sie reichen mit ihrem temperaturempfindlichen Ende in eine Wabe 28 hinein, deren Wände von mindestens einer weiteren Wabe von der Außenwand des Rahmens 23 abgegrenzt ist. In der Wabe in der das temperaturempfindliche Ende des Temperaturmeßfühlers 26 hereinragt ist eine Wabenwand entfernt worden, so daß sich ein größerer Strömungsquerschnitt ergibt. der sich nicht so leicht zusetzen kann. Dies zeigt die Ausschnittsvergrößerung der FIG 5 besonders deutlich. Auch bei diesem Katalysatorelement sind der obere und untere Temperaturmeßfühler 26,27 an einen Differenzverstärker 29 zur Bildung eines der Temperaturdifferenz entsprechenden Signals angeschlossen.

Beim Betrieb der Anlage 1 zur Minderung der Stickoxide in Rauchgasen strömen die Rauchgase über den oberen Einströmstutzen 3 in das Innere des Gehäuses 2 und durchströmen die einzelnen Lagen 8,9,10 der Katalysatorelemente 11 von oben nach unten. Sie verlassen das Gehäuse 2 durch den unteren Ausströmstutzen 4.

Beim Einströmen in den oberen Einströmstutzen 3 wird den Rauchgasen über die Düsen 5,6,7 $NH_3$ beigemischt. Unmittelbar beim Eintritt in die Katalysatorelemente 11 einer jeden Lage 9,10,11 wird die Rauchgaseintrittstemperatur über die oberen Temperaturmeßfühler 17,26 gemessen. Nach erfolgter, teilweise katalytischer Umsetzung der Stickoxide mit Ammoniak, die im wesentlichen nach der Gleichung

I    $4\,NO + NH_3 + O_2 \rightarrow 4\,N_2 + 6\,H_2O$

abläuft, wird am unteren Ende des jeweils selben Katalysatorelements die Gasaustrittstemperatur mittels der Temperaturmeßfühler 18,27 gemessen. Außer nach der vorgenannten Gleichung finden auch, wenn auch in geringerem Ausmaß, Umsetzungen nach den folgenden weiteren Gleichungen statt:

II    $6\,NO + 4\,NH_3 \rightarrow 5\,N_2 + 6\,H_2O$

III    $2\,NO_2 + 4\,NH_3 + O_2 \rightarrow 3\,N_2 + 6\,H_2O$

IV    $6\,NO_2 + 8\,NH_3 \rightarrow 7\,N_2 + 12\,H_2O$

Die Wärmetönung der vier Gleichungen ist recht unterschiedlich und liegt zwischen 300 und 650 Kilokalorien pro Mol. Weil sich aber das Verhältnis von NO zu $NO_2$ bei konstantem Betrieb einer Verbrennungsanlage praktisch nicht ändert und weil auch der Anteil der einzelnen parallel ablaufenden Reaktionen bei gegebener Rauchgastemperatur und gegebenen Katalysatorzusammensetzung konstant ist, ist die gemessene Temperaturerhöhung dennoch als Maß für die Aktivität des Katalysators heranziehbar.

Infolge der Verwendung von Katalysatorelementen 11, 22 mit in senkrechter Richtung glatten Wänden stellen die einzelnen Lagen 9,10,11 der Katalysatorelemente nur einen geringen Strömungswiderstand dar und können sich mitgerissene Feststoffpartikel nirgendwo ablagern, sondern werden durch die einzelnen Lagen der Katalysatoranordnung durchgeblasen. Aus diesem Grunde sind auch Temperaturmeßfühler, die einen geringen Querschnitt besitzen, wie Thermoelemente und Widerstandsmeßfühler, bevorzugt, denn Staubablagerungen würden einerseits die Meßempfindlichkeit herabsetzen und andererseits den Rauchgasstrom behindern.

Um möglichst wenig verfälschte Meßergebnisse zu bekommen, sind die einzelnen Temperaturmeßfühler mit ihren temperaturempfindlichen Enden so weit wie möglich von den kühleren Seitenwänden der Katalysatorelemente 11,22 weg ins Innere derselben hereinragend angeordnet. Bei dem Wabenkatalysator 22 sind zusätzlich auch noch die temperaturempfindlichen Enden der Temperaturmeßfühler 26,27 in einer Wabe 28 hereingeschoben worden, die keine gemeinsame Außenand mit dem Katalysatorelement 22 besitzt. Die gemessenen Temperaturen sind somit weitestgehend die unverfälschten Gastemperaturen und die mittels Differenzverstärker ermittelten Temperaturdifferenzen entsprechen den Umsätzen in diesen Lagen.

Zur Veranschaulichung der Funktionsweise zeigt die FIG 6 in schematischer Darstellung eine Katalysatoranordnung 30 zur Minderung der Stickoxide in Rauchgasen, bei denen vier Lagen 31, 32, 33, 34 Katalysatorelemente 35 hintereinander geschaltet sind. Außerdem besteht jede dieser vier Lagen aus paarweise unmittelbar aufeinandergestellten Katalysatorelementen 35. In dieser - schematischen Katalysatoranordnung sind die Ebenen, in denen die Temperaturmeßfühler 36 bis 47 angebracht sind, und die Differenzverstärker 48 bis 55 zur Bildung je eines der Temperaturdifferenz entsprechenden Signals schematisch angedeutet. In der Gaseintrittsebene und der Gasaustrittsebene einer jeden Lage ist ein Temperaturmeßfühler 36,38,39,41,42,44,45,47 installiert. Außerdem ist - weil jede Lage 31 bis 34 aus paarweise aufeinandergestellten Katalysatorelementen 35 aufgebaut ist -zwischen den Katalysatorelementen eines Paares jeweils ein weiterer Temperaturmeßfühler 37,40,43,46 eingebaut, welcher gleichzeitig als Temperaturmeßfühler für das austretende Rauchgas des oberen Katalysatorelementes eines Paares als auch als Temperaturmeßfühler für die in das untere Katalysatorelement eben desselben Paares einströmende Rauchgas dient. Jeweils unmittelbar übereinander angeordnete Temperaturmeßfühler einer jeden Lage 31 bis 34 sind an die Eingänge von Differenzverstärkern 48 bis 55 zur Bildung eines der Temperaturdifferenz entsprechenden Signals angeschlossen. Vor und hinter der Katalysatoranordnung 30 sind weitere Meßmittel 56,57 zur Analyse der Gaszusammensetzung angedeutet, welche an eine hier nicht weiter erläuterte Analyseneinrichtung 58 angeschlossen sind.

In der FIG 6 sind neben den einzelnen Lagen 31 bis 34 der Katalysatorelemente 35 die bei neuwertigen Katalysatoren zu messende Temperaturdifferenzen $\Delta T_1$ bis $\Delta T_8$ sowie der zu erwartende Temperaturverlauf 59 bei neuwertigen Katalysatorelementen als auch der zu erwartende Temperaturverlauf 60 bei einer Katalysatoranordnung, bei der die erste Lage vergiftet ist, eingetragen. Wie aus FIG 6 zu entnehmen ist, ist die gemessene Temperaturdifferenz $\Delta T_1 + \Delta T_2$ bei der ersten Lage 31, die vom Rauchgas durchströmt wird, am größten. Innerhalb dieser Lage 31 ist wiederum die Temperaturdifferenz $\Delta T_1$ des jeweils oberen Katalysatorelements größer als jene $\Delta T_2$ des unteren Katalysatorelements. Dies liegt daran, daß der oberen Lage und auch hier wiederum dem jeweils oberen Katalysatorelement eines jeden Paares eine höhere Stickoxid-und Ammoniakkonzentration zuströmt als den nachgeschalteten Katalysatorelementen bzw. -lagen.

Bei anfänglich mittels der Meßmittel 56,57 und zugehörigen Analysenneinrichtung 58 gemessener Konzentration der einzelnen Gasanteile vor Eintritt in die oberste Lage 31 und nach Austritt aus der untersten Lage 34 der Katalysatoranordnung 30 und Ermittlung der Abnahme der Stickoxide im Rauchgas läßt sich dieser Konzentrationsunterschied $\Delta C$ der gesamten, über alle Lagen aufsummierten Temperaturdifferenz $\Delta T_{1 bis 8}$ zuordnen und kann jedes $\Delta T_x$ einem $\Delta C_x$ zugeordnet werden. Somit sind die gemessenen Temperaturverläufe 59,60 der Abnahme der Stickoxidanteile direkt proportional. Sie lassen sich bei Inbetriebnahme der Anlage speichern oder aufschreiben. Man erhält dann als Meßpunkte die Schnittstellen der Kurve 59 mit den Linien 36 bis 47. Abweichungen von diesem Temperaturverlauf zeigen Minderungen der Aktivität der einzelnen Lagen an. So ist beispielsweise mit 60 der zu erwartende Temperaturverlauf bei weitgehend vergifteter erster Lage 31 gezeigt. Die Vergiftung der ersten Lage hat zufolge, daß hier weniger Stickoxide wie ursprünglich umgesetzt werden und folglich die Temperaturerhöhung auch geringer ausfällt. Dafür erreichen mehr Stickoxide und mehr Ammoniak die folgenden Lagen 32,33,34, so daß dort mehr Stickoxide umgesetzt werden und deren Temperaturerhöhung wächst.

Auf diese Weise lassen sich aus den Temperaturverläufen ohne großen Aufwand die Aktivitätsminderungen der einzelnen Lagen lange noch, bevor die Gesamtaktivität nennenswert abfällt, feststellen. Auch läßt sich so feststellen, ob nur eine und welche Lage ausgewechselt werden muß, was bisher so nicht ohne weiteres möglich war. Über eine zeichnerisch nicht weiter dargestellte Schaltungslogik, die an die einzelnen Differenzverstärker angeschlossen ist und die die Ausgangswerte eingespeichert hat, kann über eine einfache Soll-Istwert-Auswertung der Auswechselzeitpunkt für die Katalysatorelemente jeder Lage ermittelt werden.

**Ansprüche**

1. Katalysatoranordnung zur Minderung der Stickoxide in Rauchgasen in Gegenwart eines Reduktionsmittels mit mindestens einer den gesamten Querschnitt des Rauchgasstroms überdeckenden Lage von Katalysatorelementen und mit Meßmitteln zur Überwachung der katalytischen Aktivität,
**dadurch gekennzeichnet,**
daß in Strömungsrichtung des Rauchgases vor und hinter den einzelnen Lagen (8,9,10,31 bis 34) der Katalysatorelemente (11,35) Temperaturmeßfühler (17,18,26,27,36 bis 47) eingebaut sind und den Temperaturmeßfühlern ein Differenzverstärker (21,29,48 bis 55) zur Bestimmung der Temperaturdifferenz je Lage zugeordnet ist.

2. Katalysatoranordnung nach Anspruch 1,
**dadurch gekennzeichnet,**
daß die Ausgänge der Differenzverstärker (21,29,48 bis 55) zur Bestimmung der katalytischen Aktivität an eine die gemessene Differenz mit einem voreinstellbaren Wert vergleichende Schaltungslogik angeschlossen sind.

3. Katalysatoranordnung nach Anspruch 1,
**dadurch gekennzeichnet,**
daß die Temperaturmeßfühler (17,18,26,27,36 bis 47) in nicht verstopfbare, bzw. erodierbare Bereiche der einzelnen Katalysatorelemente (11,35) eingebaut sind.

4. Katalysatoranordnung nach Anspruch 3,
**dadurch gekennzeichnet,**
daß die Temperaturmeßfühler (17,18) bei der Verwendung von Plattenkatalysatoren (11) mit ihren Meßstellen in einen Zwischenraum zu zwei Platten (15) in einigem Abstand von den Außenwänden (14) angeordnet sind.

5. Katalysatoranordnung nach Anspruch 3,
**dadurch gekennzeichnet,**
daß die Temperaturmeßfühler (26,27) bei der Verwendung von Wabenkatalysatoren (22) in Gassen bzw. Zwischenräumen (28) der Waben eingebaut sind.

6. Katalysatoranordnung nach Anspruch 3,
**dadurch gekennzeichnet,**
daß die Temperaturmeßfühler bei der Verwendung von Schüttungen des Katalysatormaterials in Hohlräumen in Strömungsrichtung oberhalb und unterhalb der Schüttungen eingebaut sind.

7. Katalysatoranordnung nach Anspruch 6,
**dadurch gekennzeichnet,**
daß die Temperaturmeßfühler oberhalb und unterhalb mehrerer durch Roste getrennter Katalysatorschüttungen angeordnet sind.

8. Katalysatoranordnung nach Anspruch 1,
**dadurch gekennzeichnet,**
daß als Temperaturmeßfühler Widerstandsthermometer (17,18, 36 bis 47) verwendet sind.

9. Katalysatoranordnung nach Anspruch 1,
**dadurch gekennzeichnet,**
daß als Temperaturmeßfühler Thermoelemente (26,27) verwendet sind.

10. Katalysatoranordnung nach Anspruch 1,
**dadurch gekennzeichnet,**
daß als Reduktionsmittel $NH_3$ verwendet wird.

11. Katalysatoranordnung nach Anspruch 1,
**dadurch gekennzeichnet,**
daß als Reduktionsmittel CO verwendet wird.

12. Katalysatoranordnung nach Anspruch 1,
**dadurch gekennzeichnet,**
daß die Meßmittel (51,57) zur Ermittlung des Gehaltes an Stickoxiden sowohl am rauchgasseitigen Eingang als auch am Ausgang der gesamten Katalysatoranordnung (1) vorgesehen und an eine Analyseneinrichtung (58) angeschlossen sind.

FIG 1

FIG 2

FIG 3

FIG 4

FIG 5

FIG 6

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | DE-A-2 846 476 (HITACHI) --- | | B 01 D 53/36 |
| A | GB-A-2 132 112 (GENERAL ELECTRIC) --- | | |
| A | DE-A-3 407 759 (UHDE) ----- | | |

RECHERCHIERTE SACHGEBIETE (Int. Cl.4)

B 01 D 53/00

Der vorliegende Recherchenbericht wurde für alle Patentansprüche erstellt

| Recherchenort | Abschlußdatum der Recherche | Prüfer |
|---|---|---|
| DEN HAAG | 07-01-1988 | BOGAERTS M.L.M. |